# EUROPÄISCHE PATENTANMELDUNG

(11) **EP 1 195 700 A1**
(43) Veröffentlichungstag der Anmeldung: **10.04.2002**
(21) Anmeldenummer: 00121900.5
(22) Anmeldetag: 07.10.2000
(51) Int. Cl.: G06F 17/60

(54) **Verfahren zur automatisierten Erstellung multinationaler Informationen**

(71) Anmelder: Wiedemann, Kay, 40213 Düsseldorf (DE)
(72) Erfinder: Wiedemann, Kay, 40213 Düsseldorf (DE)
(74) Vertreter: Stenger, Watzke & Ring Patentanwälte

(57) **Zusammenfassung**

Ausgehend vom Stand der Technik liegt der vorliegenden Erfindung die Aufgabe zugrunde, ein Verfahren zur wenigstens teilweise automatisierten Erstellung von verschiedenen aber vereinheitlichten, die jeweiligen nationalen Kulturen und Sprachen berücksichtigenden Versionen einer multinationalen aus Bild und Text bestehenden Informationen dahingehend zu verbessern, daß dieses in Bezug auf die Organisation und Zeitablauf gestrafft, in Bezug auf das Endergebnis vereinheitlicht und in Bezug auf die Weiterverarbeitung insgesamt wirtschaftlich durchgeführt werden kann. Zur technischen Lösung dieser Aufgabe wird mit der Erfindung vorgeschlagen ein derartiges Verfahren, wobei
a) wobei in einer Zentralstelle mittels eines Rechners eine Basisversion einer aus Bild und Text in einer Basissprache bestehenden Seite fertiggestellt wird, welche in eine Bild- und Textpositionen festlegende Bildseite und eine Textliste zerlegbar ist,
b) wenigstens die Bildseiten und die Textlisteninformationen, gegebenenfalls ergänzt um die Basisversion, an in Bezug auf die jeweiligen nationalen Kulturen und Sprachen spezialisierte Kontaktstellen mittels Datenfernübertragung übermittelt werden,
c) kontaktstellenseitig eine Revision der Bildseite durchgeführt und eine Textlistenübersetzung erstellt und mittels Datenfernübertragung an die Zentralstelle rückübermittelt werden, und
d) zentralstellenseitig unter Verwendung der Übersetzungstabellen und der gegebenenfalls veränderten Bildseiten die verschiedenen nationalen Versionen der Information fertiggestellt und für den Druck vorbereitet werden.

## Beschreibung

Die vorliegende Erfindung betrifft ein Verfahren zur wenigstens teilweise automatisierten Erstellung von verschiedenen aber vereinheitlichten, die jeweiligen nationalen Kulturen und Sprachen berücksichtigenden Versionen einer multinationalen aus Bild und Text bestehenden Informationen.

Im Bereich Industrie und Handel besteht ein immenser Bedarf an multinationalen Informationen. So liegt es im Interesse der Unternehmen, in einer Vielzahl von Staaten einheitliche Werbekonzepte zu realisieren oder einheitliche Informationen wie beispielsweise Bedienungsanleitungen, Produktinformationen und dergleichen vereinheitlicht herauszugeben. Dabei sollen die Werbung oder die Informationen von der Erscheinung her in sämtlichen verwendeten Staaten völlig gleich sein und in Bezug auf die verwendeten Texte eine weitestgehend einheitliche Aussage enthalten. Dabei müssen in Bezug auf die bildlichen Darstellungen die verwendeten Symbole bzw. Bilder auf die nationalen kulturellen Besonderheiten des jeweiligen Landes abgestimmt sein und die Texte in der jeweiligen landestypischen Schrift und Sprache so umgesetzt sein, daß in sämtlichen Staaten jeweils einheitliche Darstellungen und Aussagen enthalten sind.

Zum gegenwärtigen Zeitpunkt ist die Erstellung derartiger Informationen wie Werbeplakate, Werbesendungen, Produktinformationen und dergleichen überaus aufwendig. Üblicherweise wird beispielsweise eine entsprechende Werbeaktion von entsprechend sachkundigen Dienstleistern zentral konzeptioniert. Das Ergebnis besteht aus einer in Bezug auf Bild, Text und Positionierungen fertiggestellten Basisversion, welche unter Berücksichtigung der Sicherheitserfordernisse per Post, Kurierdienste oder dergleichen in die verschiedenen Bestimmungsstaaten transportiert wird. Dort beschäftigen sich entsprechende Spezialisten an den Kontaktstellen mit der Umsetzung der Basisversion in eine auf die entsprechende Nation bzw. den entsprechenden Staat bezogene nationalisierte Version, bei welcher unter Umständen die Bilder unter Berücksichtigung der nationalen kulturellen Randbedingungen verändert und die Texte in die jeweilige Landessprache umgesetzt werden. Hier kommt es nicht selten zu erheblichen Zeitverzögerungen. Nach der Umsetzung in die landesspezifische Version werden die fertiggestellten Versionen an die Zentralstelle zurücktransportiert. die Zentralstelle hat nun das Problem der Vereinheitlichung und der Druckvorbereitung. Die Vereinheitlichung führt ebenfalls zu erheblichen zeitlichen Verzögerungen und die Druckvorbereitung gestaltet sich äußerst unwirtschaftlich, da im Prinzip jede Landesversion separat gedruckt werden muß, da die landesspezifischen Veränderungen sehr häufig auch in Details voneinander stark abweichen. Insgesamt gestalten sich derartige Vorgänge sehr zeit- und arbeitsintensiv und in Bezug auf die Kosten und die drucktechnische Umsetzung sehr unwirtschaftlich.

Ausgehend von diesem Stand der Technik liegt der vorliegenden Erfindung die **Aufgabe** zugrunde, ein Verfahren zur wenigstens teilweise automatisierten Erstellung von verschiedenen aber vereinheitlichten, die jeweiligen nationalen Kulturen und Sprachen berücksichtigenden Versionen einer multinationalen aus Bild und Text bestehenden Informationen dahingehend zu verbessern, daß dieses in Bezug auf die Organisation und Zeitablauf gestrafft, in Bezug auf das Endergebnis vereinheitlicht und in Bezug auf die Weiterverarbeitung insgesamt wirtschaftlich durchgeführt werden kann.

Zur technischen **Lösung** dieser Aufgabe wird mit der Erfindung vorgeschlagen ein Verfahren zur wenigstens teilweise automatisierten Erstellung von verschiedenen aber vereinheitlichten, die jeweiligen nationalen Kulturen und Sprachen berücksichtigenden Versionen einer multinationalen aus Bild und Text bestehenden Informationen,
a) wobei in einer Zentralstelle mittels eines Rechners eine Basisversion einer aus Bild und Text in einer Basissprache bestehenden Seite fertiggestellt wird, welche in eine Bild- und Textpositionen festlegende Bildseite und eine Textliste zerlegbar ist,
b) wenigstens die Bildseiten- und die Textlisteninformationen, gegebenenfalls ergänzt um die Basisversion, an in Bezug auf die jeweiligen nationalen Kulturen und Sprachen spezialisierte Kontaktstellen mittels Datenfernübertragung übermittelt werden,
c) kontaktstellenseitig eine Revision der Bildseite durchgeführt und eine Textlistenübersetzung erstellt und mittels Datenfernübertragung an die Zentralstelle rückübermittelt werden, und
d) zentralstellenseitig unter Verwendung der Übersetzungstabellen und der gegebenenfalls veränderten Bildseiten die verschiedenen nationalen Versionen der Information fertiggestellt und für den Druck vorbereitet werden.

Mit der Erfindung wird ein völlig neuartiges Verfahren für die Erstellung verschiedener landesspezifischer Versionen eines Basiskonzeptes vorgeschlagen, welches ermöglicht, unterschiedliche landesspezifische Versionen einer Werbung in Bezug auf Bild und Text vereinheitlicht, mit geringem wirtschaftlichen Aufwand und in kurzer Zeit fertigzustellen.

Nach Erstellung des Basiskonzeptes auf einer Rechneranlage wird eine reine Bildseite erstellt, in welcher die Positionen der einzelnen Bildelemente einerseits und der Textelemente andererseits festgelegt sind. Unabhängig davon wird eine tabellenartige Textliste erstellt, in welcher die einzelnen Sätze, Absätze oder inhaltlichen Einheiten voneinander abgegrenzt sind. Die Bildseite und die Textseite werden per Datenfernübertragung an die Kontaktstellen in den verschiedenen Ländern übermittelt. Gegebenenfalls kann zur Ergänzung bzw. zur Erzielung eines allgemeinen Überblicks eine Version der erstellten Basisseite mit übermittelt werden. Der Basistext wird üblicherweise in einer international geläufigen Basissprache, beispielsweise einem speziellen und in der Werbebranche typischen Englisch erstellt.

Auf der Kontaktstellenseite können nun die Bildseite unter Berücksichtigung der kulturellen Randbedingungen des jeweiligen Landes einerseits und getrennt davon die Textliste unter Berücksichtigung der landesspezifischen Sprache unabhängig voneinander bearbeitet werden. Die tabellenartige Textliste, welche gemäß einem Vorschlag der Erfindung in einer Spalte die einzelnen Segmente des Basistextes enthält, kann in einer daneben liegenden Spalte segmentweise in Landessprach-Texten ausgeführt werden. Die Bildseite und die Textliste werden nach Überarbeitung zusammen oder auch getrennt voneinander an die Zentralstelle zurück übermittelt, wobei ebenfalls Datenfernübertragung verwendet wird.

Bei der Zentralstelle gehen nun landesspezifische Bildversionen ein, so daß hier auf einfache Weise eine weitere vereinheitlichende Verarbeitung erfolgen kann oder unterschiedliche landestypische Versionen abschließend festgelegt werden können. Die verschiedenen landessprachigen Tabellen können zu einer Gesamttabelle zusammengefaßt oder einzeln bearbeitet werden. Dabei ist es die Aufgabe der Zentralstelle, die in den Tabellen aufgeführten landessprachigen Segmente hinsichtlich Plazierung und dergleichen zu überprüfen.

Zentralstellenseitig werden nun landesspezifische Versionen des Basiskonzeptes erstellt, ebenfalls wieder in Bildseite und Textliste aufgeteilt und gemäß einem weiteren vorteilhaften Vorschlag der Erfindung zur wiederholten Überprüfung und Kontrolle an die Kontaktstellen übermittelt. Die Erfindung sieht dabei gemäß einem vorteilhaften Vorschlag vor, unterschiedliche redundante Kontaktstellen einzubeziehen, um beispielsweise von einer Kontaktstelle die Basistransformation durchführen zu lassen, von einer anderen die Überprüfung und Korrektur. Auf diese Weise werden gegenüber herkömmlichen Verfahren verbesserte inhaltliche Ergebnisse erzielt.

Erfindungsgemäß kann vorgesehen sein, diese Schleife von Erstellung einer landesspezifischen Version und Übermittlung zur Überprüfung und Kontrolle sowie Rückübermittlung nach der Bearbeitung mehrfach zu wiederholen, bis ein abschließendes landesspezifisches Ergebnis vorliegt.

Zentralstellenseitig liegt nun vorzugsweise eine für alle Staaten gültige Bildseitenversion vor, allenfalls eine zweite oder dritte Bildseitenversion für spezielle Länder zur Berücksichtigung der dortigen kulturellen Besonderheiten. Weiterhin liegt der Zentralstelle eine Tabelle von Textsegmenten in sämtlichen Landessprachen vor, die in landesspezifische Texte zusammengestellt werde können, die hinsichtlich Positionierung und Aussage in Bezug auf die verschiedenen Staaten völlig vereinheitlicht sind.

Aufgrund des Verfahrens ist nunmehr die Druckvorbereitung erheblich vereinfacht und bedeutend wirtschaftlicher realisierbar. Im Idealfall liegt eine Bildseitenversion für alle Staaten vor, und eine entsprechende Vielzahl von gleichartigen Texten in den jeweiligen Landessprachen. Auf der Druckerseite kann somit auf einfache Weise eine Vielzahl landestypischer Versionen der gleichen Information erstellt werden. Beispielsweise kann druckerseitig in einer Großauflage die Bildseite gedruckt und dann in einem zweiten Schritt entsprechende Landesversionen unter Verwendung der landessprachigen Texte erstellt werden. Schlimmstenfalls müssen, wenn die Bildseiten beispielsweise für eine Landeskultur anstößige Elemente umfassen, eine geringe Variationszahl von Bildseiten vorbereitet werden.

Gemäß einem vorteilhaften Vorschlag der Erfindung kann das Verfahren dadurch vereinfacht werden, daß zentralstellenseitig die unterschiedlichen Softwareprodukte der Kontaktstellen berücksichtigt werden. Hierzu kann in einem Rechner voll automatisiert eine entsprechende Umsetzung erfolgen, so daß die jeweiligen Kontaktstellen Bildseiten und Textseiten in Datenversionen erhalten, die sie direkt mit der bei ihnen befindlichen Software bearbeiten können. Gemäß einem weiteren vorteilhaften Vorschlag der Erfindung können Zentralstelle und Kontaktstellen eine vereinheitlichte, kompatible Softwarebasis verwenden.

Mit besonderem Vorteil wird mit der Erfindung vorgeschlagen, daß für die Datenfernübertragung das Internet verwendet wird. Aufgrund der internationalen Verbreitung dieses Fernübertragungsmediums können in den verschiedenen Staaten nahezu beliebige Kontaktstellen angesprochen bzw. eingerichtet werden. Hierdurch wird das erfindungsgemäß Verfahren auch massenprozeßfähig. Während bisher entsprechende multinationale, vereinheitlichte Informationen wegen dem verbundenen großen Aufwand und der damit verbundenen hohen Kosten in erster Linie Großkonzernen und internationalen Unternehmen vorbehalten waren, erlauben die arbeitstechnischen und kostenseitigen Verbesserungen nunmehr auch die Nutzung durch mittlere und kleinere Unternehmen.

Die übermittelten Daten können codiert oder zumindest derart abgesichert sein, daß eine Zugangskontrolle ermöglicht ist. So können an die Kontaktstellen Paßwörter übermittelt werden, welche diesen den Zugang zu den übermittelten Dokumenten eröffnet. Auf diese Weise kann ein Mißbrauch des Systems durch unberechtigte Dritte verhindert werden.

Gemäß einem weiteren vorteilhaften Vorschlag der Erfindung kann zusätzlich zur Bildseite und zur Textliste eine Kommentarliste übermittelt werden, so daß die Bearbeiter begleitende Kommentare unabhängig von den eigentlichen zu bearbeitenden Daten austauschen können. Schließlich wird mit der Erfindung vorgeschlagen, die einzelnen Verfahrensschritte innerhalb eines Zeitrahmens ablaufen zu lassen. Auf diese Weise kann von der Zentralstelle aus eine zeitlich und organisatorisch gestraffte Projektabwicklung gewährleistet werden.

Gemäß einem weiteren vorteilhaften Vorschlag der Erfindung wird die Textliste aus der Basisversion automatisch erstellt. Dabei kann vorgesehen werden, daß nurmehr eine hinsichtlich Bild- und Textpositionen festgelegte Basisversion übermittelt wird, aus welcher unter Anwendung einer entsprechenden Software automatisch die Textinformationen hinsichtlich der Positionierung exakt identifiziert und herausgefiltert werden. Nach Erstellung einer Textübersetzung ist die Rückpositionierung ebenfalls automatisiert durchführbar, so daß neben der eigentlichen Wortübersetzung auch zugleich die Positionierung und das Gesamtlayout überprüfbar sind.

Die Erfindung ermöglicht auf einfache und wirtschaftliche Weise die zentral koordinierte Erstellung einer Vielzahl nationaler Versionen einer aus Bild und Text bestehenden Information, die multinational vereinheitlicht ist. Das erfindungsgemäße Verfahren kann auf verschiedenen Ebenen angewandt werden. So können gruppenweise Verbundsysteme etabliert werden, bestehend aus wenigstens einer Zentralstelle und einer entsprechenden auf die einzelnen Nationen spezialisierten Anzahl von Kontaktstellen. Auch kann das erfindungsgemäße Verfahren zur organisatorischen Abwicklung projektweise entsprechenden Bedarfsträgern zur Verfügung gestellt werden. Weiterhin kann das Verfahren einer beliebigen Zugangsgruppe durch Bereitstellung einer Serverzentrale bereitgestellt werden. Das erfindungsgemäße Verfahren vereinfacht die Erstellung multinationaler Informationen erheblich und erzielt beachtliche zeitliche, organisatorische und wirtschaftliche Vorteile gegenüber dem Stand der Technik.

Weitere Vorteile und Merkmale der Erfindung ergeben sich aus der folgenden Beschreibung anhand eines Beispiels. Dabei zeigen:
- Fig. 1: eine beispielhafte Basisversion bestehend aus Text und Bildinformationen;
- Fig. 2: eine aus der Basisversion erstellte Textliste mit einer Erstübersetzungstabelle, und
- Fig. 3: eine aufgrund der Erstübersetzungstabelle erarbeitete Textliste mit einer Korrekturtabelle.

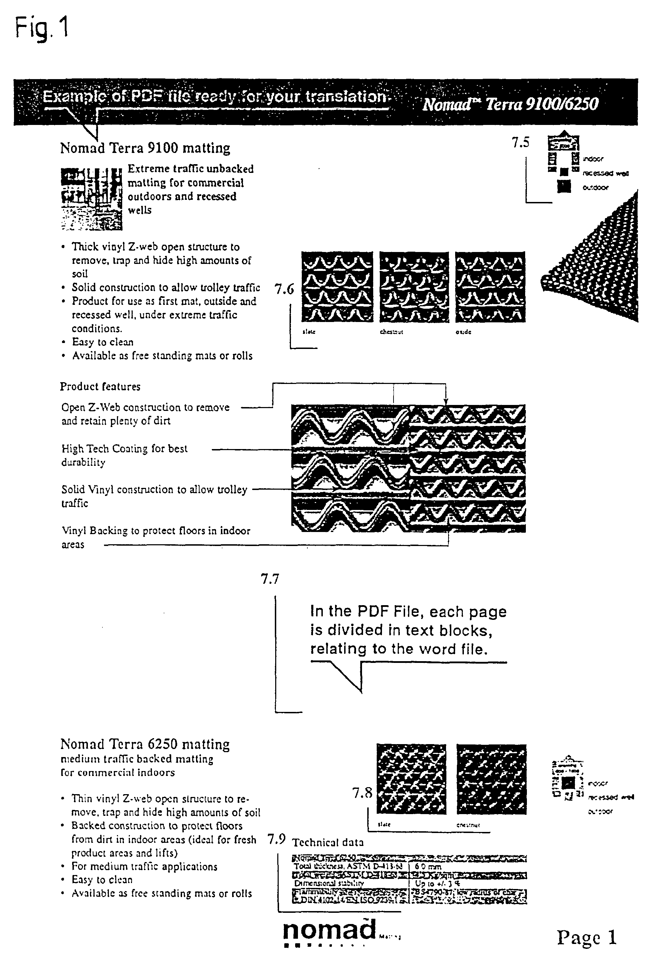

Gemäß Fig. 1 wird eine Basisversion einer Produktinformation erstellt. Diese kann eine Werbung, eine Produktbeschreibung oder eine sonstige Information sein. Diese besteht aus konkreten Bildpositionierungen und konkreten Schriftpositionierungen. Die Basisversion wird in einer unter Bearbeitungsgesichtspunkten gewählten Basissprache erstellt. Das diesbezüglich gewählte Englisch ist nicht zwangsläufig die endgültige Werbe- bzw. Informationsversion in der englischen Sprache, sondern eine Basissprache, die sich für die Erstellung der Übersetzungen und die Übertragung der Inhalte besonders eignet.

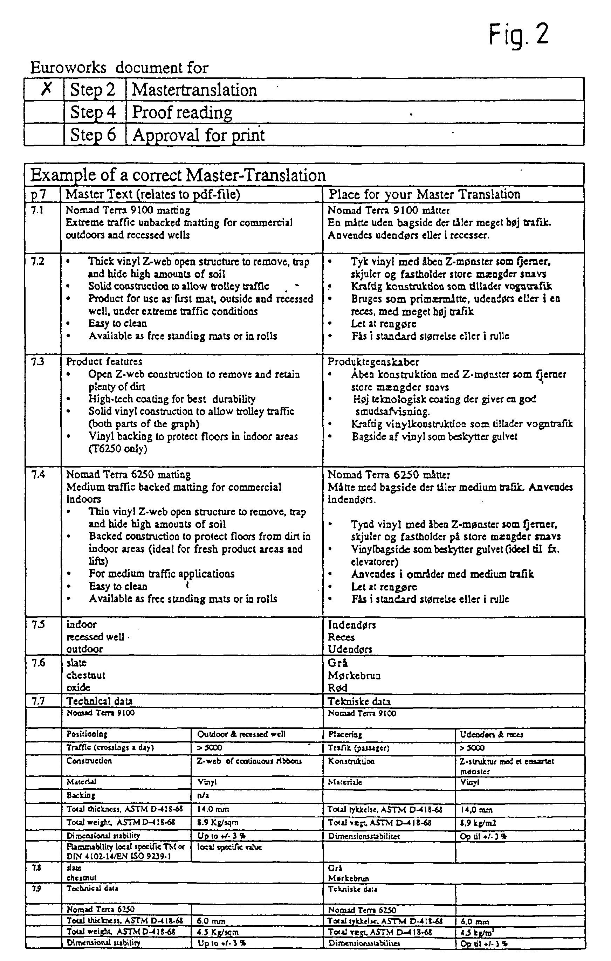

Gemäß Fig. 2 ist aufgrund der Basisversion eine Textliste erstellt (linke Spalte) in welcher die einzelnen zu übersetzenden Elemente aufgeführt sind. Diese sind nach Positionierungsgesichtspunkten ineinander getrennt, können aber bei automatischer Erstellung auch der Reihe nach oder ohne Zeilenzerlegung aufgeführt werden.

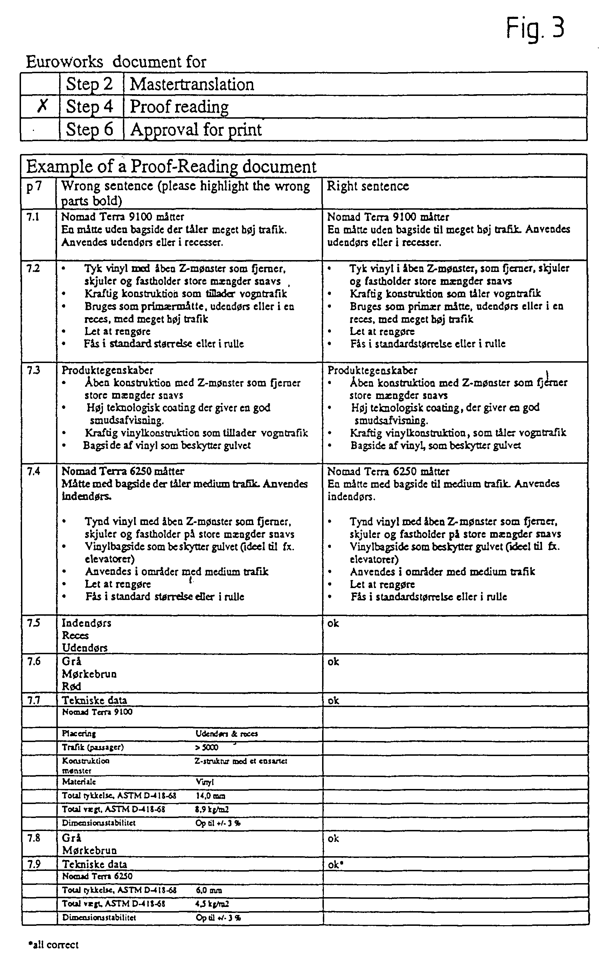

In der rechten Spalte gemäß Fig. 2 werden dann nach verfahrensgemäßer Übermittlung von einschlägigen Bearbeitern in der jeweiligen nationalen Sprache, hier dänisch, die Textelemente derart übersetzt, daß die Inhalte der Basisversion in der jeweiligen Sprache optimal getroffen werden. Diese fertiggestellte Textliste, oder bei automatischer Erstellung die in der nationalen Sprache überarbeitete Basisversion werden dann an die Zentrale zurückübermittelt. Diese erstellt aufgrund der Erstübermittlung eine wie in Fig. 3 gezeigte Textlistenprüfversion oder endgültige Basisversion zur Prüfversion. Diese wird dann wiederholt an die übersetzenden Bearbeiter übermittelt, welche, wie in der rechten Spalte gemäß Fig. 3 ersichtlich, Korrekturen ausführen. Dieser Vorgang wird so lange wiederholt, bis die Basisversion in der jeweiligen nationalen Sprache druckfertig ist, daß sogenannte proval for print gegeben wird.

Das beschriebene Ausführungsbeispiel dient nur der Erläuterung und ist nicht beschränkend.

## Patentansprüche

1. Verfahren zur wenigstens teilweise automatisierten Erstellung von verschiedenen aber vereinheitlichten, die jeweiligen nationalen Kulturen und Sprachen berücksichtigenden Versionen einer multinationalen aus Bild und Text bestehenden Informationen,
a) wobei in einer Zentralstelle mittels eines Rechners eine Basisversion einer aus Bild und Text in einer Basissprache bestehenden Seite fertiggestellt wird, welche in eine Bild- und Textpositionen festlegende Bildseite und eine Textliste zerlegbar ist,
b) wenigstens die Bildseiten- und die Textlisteninformationen, gegebenenfalls ergänzt um die Basisversion, an in Bezug auf die jeweiligen nationalen Kulturen und Sprachen spezialisierte Kontaktstellen mittels Datenfernübertragung übermittelt werden,
c) kontaktstellenseitig eine Revision der Bildseite durchgeführt und eine Textlistenübersetzung erstellt und mittels Datenfernübertragung an die Zentralstelle rückübermittelt werden, und
d) zentralstellenseitig unter Verwendung der Übersetzungstabellen und der gegebenenfalls veränderten Bildseiten die verschiedenen nationalen Versionen der Information fertiggestellt und für den Druck vorbereitet werden.

2. Verfahren nach Anspruch 1, **dadurch gekennzeichnet, daß** zwischen den Schritten c und d zentralstellenseitig nationalisierte Erstversionen erstellt und zur Überprüfung und Korrektur mittels Datenfernübertragung die Kontaktstellen übermittelt werden, welche die Seiten nach Bearbeitung rückübermitteln.

3. Verfahren nach Anspruch 2, **dadurch gekennzeichnet, daß** der Schritt der Überprüfung und Korrektur mehrfach wiederholt wird.

4. Verfahren nach einem der vorhergehenden Ansprüche, **dadurch gekennzeichnet, daß** für eine nationale Version in verschiedenen Phasen verschiedene Kontaktstellen einbezogen werden.

5. Verfahren nach einem der vorhergehenden Ansprüche, **dadurch gekennzeichnet, daß** zentralstellenseitig die zu übermittelnden Daten auf kontakstellenseitige Software abgeglichen werden.

6. Verfahren nach einem der vorhergehenden Ansprüche, **dadurch gekennzeichnet, daß** zentralstellenseitig und kontaktstellenseitig eine kompatible Softwarebasis verwenden wird.

7. Verfahren nach einem der vorhergehenden Ansprüche, **dadurch gekennzeichnet, daß** die Datenfernübertragung durch Verwendung des Internet durchgeführt wird.

8. Verfahren nach einem der vorhergehenden Ansprüche, **dadurch gekennzeichnet, daß** die übermittelten Daten zugangsgesichert werden.

9. Verfahren nach einem der vorhergehenden Ansprüche, **dadurch gekennzeichnet, daß** die Bildseite und die Textliste um eine Kommentarliste ergänzt werden.

10. Verfahren nach einem der vorhergehenden Ansprüche, **dadurch gekennzeichnet, daß** die aufgrund der übermittelten Daten durchzuführenden Bearbeitungen in einen Zeitrahmen eingefügt werden.

11. Verfahren nach einem der vorhergehenden Ansprüche, **dadurch gekennzeichnet, daß** die Textlistenerstellung aus der Basisversion automatisch erfolgt.
